# EUROPEAN PATENT APPLICATION

(11) **EP 4 400 210 A1**
(43) Date of publication of application: **17.07.2024**
(21) Application number: 22865120.4
(22) Date of filing: 05.09.2022
(51) Int. Cl.: B01J 20/20, B01J 20/28, B01J 20/32, B01D 53/04

(54) **COMPOSITE COMPRISING ORGANOMETALLIC NANOSTRUCTURE POWDER AND METHOD FOR PRODUCING SAME**

(30) Priority: 06.09.2021 KR 20210118057
(71) Applicant: LG Chem, Ltd., Seoul 07336 (KR)
(72) Inventor: HAN, Jun Kyu, Daejeon 34122 (KR); KWON, Heon Yong, Daejeon 34122 (KR); KIM, Seongmin, Daejeon 34122 (KR)
(74) Representative: Goddar, Heinz J.
(86) International application number: PCT/KR2022/013285
(87) International publication number: WO 2023/033618

(57) **Abstract**

The present invention relates to a composite including a crystalline hybrid nanoporous material powder, that may have excellent thermal stability and structural stability with respect to pressure because of the coated structural properties of an organometal nanostructure on the surface of a seed, may maintain the conventional properties during converting from the crystalline hybrid nanoporous material powder into a composite because of the bonding force of the seed and the organometal nanostructure, and may reduce the production amount of a fine powder due to abrasion without deterioration of ability to adsorb volatile organic compounds (VOC), and a method for preparing same.

## Description

### TECHNICAL FIELD

### Cross-reference to Related Applications

The present application claims the benefit of priority based on Korean Patent Application No. 10-2021-0118057, filed on September 6, 2021, the entire contents of which are incorporated herein by reference.

### Technical Field

The present invention relates to a composite comprising an organometal nanostructure powder and a method for preparing same, more particularly, to a composite comprising an organometal nanostructure powder, that may maintain the properties of the organometal nanostructure powder because of auniform particle diameter size and being structurally stable, and may reduce the production amount of a fine powder without deteriorating ability to adsorb volatile organic compounds (VOC), and a method for preparing same.

### BACKGROUND ART

An organometalnanostructure is an organic inorganic polymer compound formed by combining a metal ion with an organic ligand and means a crystalline compound with a porous type, including both an organic material and an inorganic material in a skeleton structure and having a pore structure with a micro size or a nano size.

Such an organometal nanostructure has a large surface area and pores with a micro size or a nano size, and is used for capturing molecules smaller than the pore size or for separating molecules according to the size of molecules using pores, as well as used as an adsorbent, a gas-storing material, a sensor, a membrane, a functional thin film, a drug delivery material, a catalyst and a catalyst support, and accordingly, is being actively studied until now.

However, the organometal nanostructure has low thermal stability and structural stability with respect to pressure, and there are problems of not maintaining the properties of an organometal nanostructure powder showing high crystallinity and porous type during converting an organometal nanostructure powder to a composite. In addition, due to such problems, there are problems in that technology is limited in converting an organometal nanostructure powder having an average particle diameter of 1 um to 3 um into a composite having an average particle diameter of a several tens um to mm unit.

In addition, an organometal nanostructure powder has low mutual gathering, and a process of mixing with a binder or an additive and applying a mechanical pressure is required, but by the amount of the binder or additive added, the pores of the organometal nanostructure may be blocked, or crystallinity may be deteriorated. As a result, there are problems in that the surface area of the organometal nanostructuremay be markedly reduced, ability to adsorb volatile organic compounds (VOC) may be degraded, and the production amount of a fine powder may increase due to abrasion.

Accordingly, study on a composite maintaining the conventional properties during converting an organometal nanostructure powder into a composite, not degrading ability to adsorb volatile organic compounds (VOC), reducing the production of a fine powder due to abrasion, and including structurally stable organometal nanostructure powder, is required.

### DISCLOSURE OF THE INVENTION

### TECHNICAL PROBLEM

The present invention is to solve the above-described problems and provides a composite including an organometal nanostructure powder, that may maintain the properties of an organometal nanostructure powder because of the uniform size of aparticle diameter and structural stability, may reduce the production amount of a fine powder due to abrasion without deterioration of ability to adsorb volatile organic compounds (VOC) and may reinforce manufacturing competitiveness, by adopting a method for preparing a composite by forming a coating part including an organometal nanostructure and a binder on the surface of a seed particle, and a method for preparing same.

### TECHNICAL SOLUTION

The present invention provides a composite and a method for preparing same.
(1) The present invention provides acomposite comprising: a seed particle; and a coating part formed on the seed particle, wherein the coating part comprises an organometal nanostructure and a binder,an average particle diameter of the seed particles is 150 um to 3,350 µm, and an average particle diameter of the composite is 110% to 700% with respect to the average particle diameter of the seed particles.
(2) The present invention provides the composite according to (1), wherein the seed particle comprises one or more selected from the group consisting of carbon nanotube, graphene, graphite, amorphous carbon, carbon black, activated carbon, a metal material and an organometal nanostructure.
(3) The present invention provides the composite according to (1) or (2), wherein the seed particle is spherical or pseudo-spherical.
(4) The present invention provides the compositeaccording to any one of (1) to (3), wherein the average particle diameter of the seed particles is 150 um to 300 µm.
(5) The present invention provides the composite according to any one of (1) to (4), wherein the composite has particle size distribution such that particles having an average particle diameter of 150 um to 600 um are 80 wt% or more.
(6) The present invention provides the composite according to any one of (1) to (5), wherein the average particle diameter of the composite is 150 um to 3,350 µm.
(7) The present invention provides the composite according to any one of(1) to (6), wherein a specific surface area per weight of the seed particles is 10 m²/g or more.
(8) The present invention provides the composite according to any one of (1) to (7), wherein the binder comprises one or more selected from the group consisting of polyvinyl butyral (PVB), polyvinyl alcohol (PVA), polyvinyl chloride (PVC), polycarbonate (PC), polyamide (PA), polyoxymethylene (POM), polystyrene (PS), polyvinyl pyrrolidone (PVP), hydroxypropyl methylcellulose (HPMC) and acetylcellulose.
(9) The present invention provides the composite according to any one of (1) to (8), wherein the coating part has a coating ratio calculated by Mathematical Formula 1 of 10% to 90%. Coating ratio= {(mass of coated composite) / (mass of seed particles before coating) + (mass of organometal nanostructure before coating)} X 100 (%)
(10) The present invention provides a method for preparing a composite, comprising:a step of injecting seed particles into a fluid bed coating machine and making the seed particles flow (S1); anda step of spraying a slurry comprising an organometal nanostructure and a binder onto the seed particles in flowing (S2).
(11) The present invention provides the method for preparing a composite according to (10), whereinthe spraying of step (S2) is conducted by a Wurster spray method by which the spraying is conducted upwards from a bottom of the fluid bed coating machine or by a Tangential spray method by which the spraying is conducted from a middle of the fluid bed coating machine to a tangential direction.
(12) The present invention provides the method for preparing a composite according to (10) or (11), wherein the slurry comprises the binder in 1 to 40 parts by weight based on 100 parts by weight of the organometal nanostructure.
(13) The present invention provides the method for preparing a composite according to any one of (10) to (12), wherein the binder has a weight average molecular weight of 100,000 g/mol to 250,000 g/mol.

### ADVANTAGEOUS EFFECTS

Thecomposite and the method for preparing same of the present inventionshow excellent effects of thermal stability and structural stability with respect to pressure because of structural properties formed by an organometal nanostructure and a binder on the surface of a seed. In addition, due to the bonding force of the seed and the organometal nanostructure, the conventional properties may be maintained during converting an organometal nanostructure powder into a composite, and effects of reducing the production amount ofa fine powder due to abrasion may be achieved without deteriorating ability to adsorb volatile organic compounds (VOC). In addition, effects of selectively controlling the size of the composite according to a product to be applied may be achieved by controlling the size of the seed. In addition, manufacturing competitiveness may be reinforced by reducing the amount used of the organometal nanostructure by introducing a method for preparing a composite by forming an organometal nanostructure only on the surface of the seed by simply mixing an organometal nanostructure and a binderin the conventional method for preparing a composite.

### BRIEF DESCRIPTION OF THE DRAWINGS

FIG. 1 shows acompressive fracture strength of the composites of Examples 4 and 6 and the activated carbon of Comparative Example 3.
FIG. 2 shows particle size distribution of composites that may be prepared by the size of seed particles.
FIG. 3 is a photographic image showing the cross-section of a composite structure of a seed-shell structure prepared in practice according to a method for preparing a composite of the present invention and taken by X-RAY CT.

### BEST MODE FOR CARRYING OUT THE INVENTION

It will be understood that words or terms used in the description and claims of the present invention shall not be interpreted as the meaning defined in commonly used dictionaries. It will be understood that the words or terms should be interpreted as having a meaning that is consistent with their meaning in the technical idea of the invention, based on the principle that an inventor may properly define the meaning of the words to best explain the invention.

In the present invention, a weight average molecular weight may mean a relative value on a standard polystyrene (PS) specimen through gel permeation chromatography (GPC, waters breeze) using tetrahydrofuran (THF) as an eluent.

Hereinafter, the present invention will be explained in more detail.

### Composite

The present invention provides a composite comprising a seed particle and a coating part formed on the seed particle, wherein the coating part comprises an organometal nanostructure and a binder, an average particle diameter of the seed particles is 150 um to 3,350 µm, andan average particle diameter of the composite is 110% to 700% with respect to the average particle diameter of the seed particles.

Generally, an organometal nanostructure powder has low mutual gathering, and a process of mixing the organometal nanostructure powder with a binder or an additive to prepare a powder lump and applying a mechanical pressure has been required for preparing an organometal nanostructure composite. However, by the amount of the binder or additive added, the pores of the organometal nanostructurewere blocked, or crystallinity was deteriorated. As a result, there were problems in that the surface area of the organometal nanostructurewas largely reduced, ability to adsorb volatile organic compounds (VOC) was degraded, and the production amount of a fine powder increased due to abrasion.

In order to solve such problems, the present invention introduces a seed-shell structure introducing seed particles and forming a coating part including an organometal nanostructure and a binder on the surface of the seed particle. The bonding force between the seed particle and the organometal nanostructure may complement the mutual gathering of an organometal nanostructure powder, and a process of injecting a binder or an additive to a process for preparing a composite and mechanically applying a pressure is not required. As a result, the properties of the conventional organometal nanostructure may be maintained during a process of converting the organometal nanostructure powder into a composite, and the production amount of a fine powder by abrasion may be reduced without deteriorating ability to adsorb volatile organic compounds (VOC). In addition, by controlling the size of the seed particles, the size of a composite could be selectively controlled according to the products to apply, and since the organometal nanostructure is formed only on the surface of the seed particle, the amount used of the organometal nanostructure may be reduced, thereby reinforcing manufacturing competitiveness.

According to an embodiment of the present invention, the type of the seed particle in the present invention may be one or more selected from the group consisting of carbon nanotube, graphene, graphite, amorphous carbon, carbon black, activated carbon, a metal material and an organometal nanostructure. In addition, considering that the organometal nanostructure has inferior ability to adsorb toluene among volatile organic compounds (VOC), the seed particle may be activated carbon that has excellent ability to adsorb toluene.

In addition, according to an embodiment of the present invention, the seed particle of the present invention may be spherical or pseudo-spherical. The pseudo-spherical means a shape generally close to spherical including a shape of which cross-section passing through the center of gravity of the seed particle is an elliptical shape, or a shape in which the surface of the seed particle is uneven, and some are protruding, and may include an elliptical shape,an oval shape, or a spherical shape,elliptical shape, andovalshape having protrusion. If the shape of the seed particle is spherical or pseudo-spherical, effects of increasing the coating amount of slurry on the surface of the seed particle may be achieved.

In addition, according to an embodiment of the present invention, an average particle diameter of the seed particles of the present invention may be 150 um to 3,350 um. Particularly, the average particle diameter of the seed particles may be 150 µm or more,210 µm or more, 250 µm or more, 300 µm or more, 400 µm or more, 500 µm or more, 600 µm or more, 700 um or more, 800 um or more, 850 um or more, or 1,000 um or more, and 3,350 µm or less, 2,800 µm or less, 2,360 um or less, 2,000 um or less, 1,400 um or less, or 1,200 um or less. If the average particle diameter of the seed particles deviates from the range, the size of the average particle diameter of the composite finally prepared is difficult to efficiently control, and the adsorption and abrasion degree properties of the composite may be degraded.

In addition, the average particle diameter of the seed particles may be classified according to the use of the composite finally prepared. A composite including seed particles having an average particle diameter of 150 um to 300 µm, has advantages in adsorbing indoor VOC due to a large surface area and could be used in products related to real life such as an air cleaner, and a composite including seed particles having an average particle diameter of 850 um to 2,000 um has a large distance between particles and advantages of not forming a differential pressure, and could be mainly used in a gas mask, or the like. In addition, a composite including seed particles having an average particle diameter of 2,000 um to 3,350 um has advantages of strong physical properties, particularly, excellent strength, and may be used in specific environments such as an adsorption tower in the factory.

In addition, according to an embodiment of the present invention, the specific surface area per weight of the seed particles of the present invention may be 10 m²/g or more, 50 m²/g or more, 100 m²/g or more, 200 m²/g or more, 300 m²/g or more, or 400 m²/g or more and 1,000 m²/g or less, 900 m²/g or less, 800 m²/g or less, 700 m²/g or less, 600 m²/g or less, or 500 m²/g or less. If the above-described range is satisfied, effects of improving adsorption on volatile organic compounds may be achieved, while maintaining structural stability.

According to an embodiment of the present invention, the composite of the present invention may have particle size distribution such that particles having an average particle diameter of 150 um to 600 um are 80 wt% or more, preferably, have particle size distribution such that particles having an average particle diameter of 150 um to 600 um are 80 wt% or more, 85 wt% or more, 87 wt% or more, 91 wt% or more, or 95 wt% or more.

If the above-described range is satisfied, thermal stability and resistance to pressure are excellent, and effects of applying to various products may be achieved. Though a small amount of the organometal nanostructure powder is included, the production amount of a fine powder due to the abrasion of composite particles may be reduced without degrading the adsorption of volatile organic compounds, and effects of minimizing agglomerating phenomenon among composite particles may be achieved.

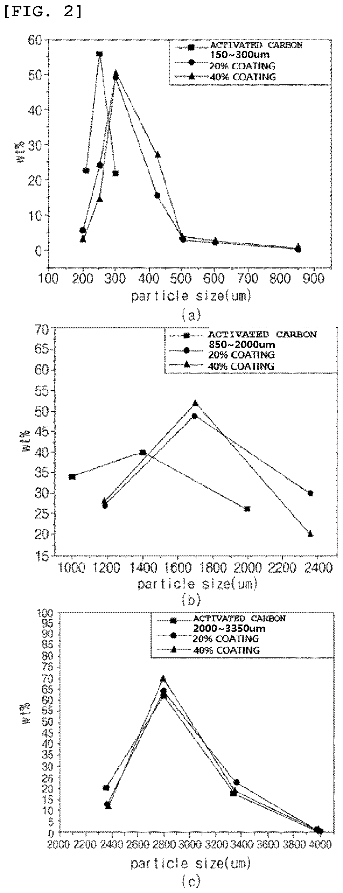

FIG.2 shows particle size distribution of composites that may be prepared by the size of seed particles. Particularly, in FIG. 2, (a) shows particle size distribution of a composite including seed particles having an average particle diameter of 150 um to 300 µm, (b) shows particle size distribution of a composite including seed particles having an average particle diameter of 850 um to 2,000 um, and (c) shows particle size distribution of a composite including seed particles having an average particle diameter of 2,000 um to 3,350 um. Referring to FIG. 2, the average particle diameter of the composite of the present invention may be 150 um to 3,350 um. The composite of the present invention may be prepared by a method of spraying a slurry including the organometal nanostructure on the surface of the seed particles through a fluid bed coating machine which will be explained later, and composites having various sizes may be prepared according to the size of the seed particles. Though seed particles having a large average particle diameter are used, a composite having a uniform average particle diameter could be prepared. That is, if the size of the seed particle could be controlled, the composite of the present invention may selectively control the size of the composite according to the product to apply, and since the organometal nanostructure is formed only on the surface of the seed particle, effects ofreinforcing manufacturing competitiveness may be achieved by reducing the amount used of the organometal nanostructure.

In addition, the average particle diameters of the seed particles and the composite may mean arithmetic particle diameters in particle size distribution measured by a sieve shaker. The arithmetic particle diameter could be measured as an intensity distribution particle diameter, a volume distribution particle diameter and a number distribution particle diameter, and among them, the volume distribution particle diameter is preferably measured. Particularly, the average particle diameters of the seed particles and the composite of the present invention may be a volume distribution particle diameter obtained by installing meshes step by step by the mesh size of 150 µm, 200 µm, 250 µm, 300 um, 425 µm, 500 µm, 600 µm, and 850 um using a sieve shaker, and measuring particle size distribution for each section.

In addition, the composite of the present invention may have a compressive fracture strength of 2.7 N or more, 3.0 N or more, or 3.3 N or more. If the above-described range is satisfied, the crystallinity and porous properties of an organometal nanostructure included in a composite may be maintained, thermal stability and resistance to pressure may be excellent without degrading ability to adsorb volatile organic compounds when compared to the conventional composite, and effects of applying to various products may be achieved.

According to an embodiment of the present invention, the composite of the present invention may include a binder for attaching the organometal nanostructure particles from each other. The binder may use an organic polymer or an inorganic material, for example, one or more selected from the group consisting of polyvinyl butyral (PVB), polyvinyl alcohol (PVA), polyvinyl chloride (PVC), polycarbonate (PC), polyamide (PA), polyoxymethylene (POM), polystyrene (PS), polyvinyl pyrrolidone (PVP), hydroxypropyl methylcellulose (HPMC) and acetylcellulose, which are organic polymers.

In addition, according to an embodiment of the present invention, the present invention may show the coating ratio of the coating part formed on the seed particle of 10% to 90%, 10% to 85%, or 40% to 80%, and the coating ratio may be calculated by Mathematical Formula 1 below. Coating ratio (%) = {(mass of coated composite) / (mass of seed particles before coating) + (mass of organometal nanostructure before coating)} X 100(%)

If the above-described range is satisfied, effects of reinforcing manufacturing competitiveness may be achieved by reducing the amount used of an organometal nanostructure without degrading ability to adsorb volatile organic compounds.

### Method for preparing composite

The present invention provides a method for preparing a composite, comprising a step of injecting seed particles into a fluid bed coating machine and making the seed particles flow (S1) and a step of spraying a slurry comprising an organometal nanostructure and a binder onto the seed particles in flowing (S2).

Generally, a composite including an organometal nanostructure may be prepared as a composite by a process of preparing an organometal nanostructure powder, mixing with a binder and applying a mechanical pressure. In order to prepare the organometal nanostructure powder, an organometal nanostructure may be filtered and washed, an organometal nanostructure slurry may be prepared and dried, and then, a milling process may be performed. In addition, in order to prepare the composite, the organometal nanostructure powder prepared may be mixed with a binder, a mechanical pressure may be applied, and a drying process may be performed. Accordingly, the whole process for preparing the composite is complicated, there are a lot of variables that may arise during the process, and there are problems in that the quality of the composite prepared is difficult to maintain.

In order to solve such problems, the present invention introduces a preparation method of coating a slurry including an organometal nanostructure powder and a binder on the surface of a seed particle using a fluid bed coating machine, and performing drying and granulation simultaneously. According to the preparation method of the present invention, an organometal nanostructure slurry is prepared and dried, and though not involving a process of preparing an organometal nanostructure powder by a milling process, a granulation process could be performed using the organometal nanostructure filtered and washed. Accordingly, effects of simplifying the conventional process for preparing an organometal nanostructure powder could be achieved.

In addition, the composite of the present invention has a seed-shell structure formed by a slurry including an organometal nanostructure and a binder on the surface of a seed particle, and because of the bonding force of the seed particle and the organometal nanostructure, the application of a mechanical pressure and a separate drying process are not required during the preparation process of the composite. Accordingly, the conventional process for converting an organometal nanostructure powder into a composite may be simplified, the crystallinity and porous properties of the organometal nanostructure included in the composite prepared could be maintained, variables that may arise during processing may be minimized, and effects of maintaining the quality of the composite prepared constant may be achieved.

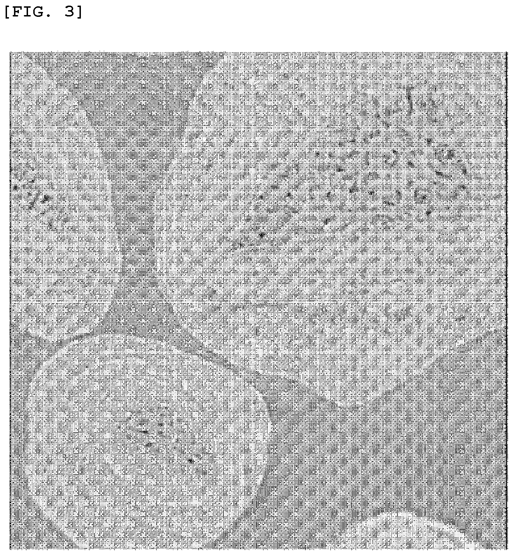

FIG. 3 is a photographic image showing the cross-section of a composite structure of a seed-shell structure prepared in practice according to a method for preparing a composite of the present invention and taken by X-RAY CT. Referring to FIG. 3, it could be confirmed that the composite of the present invention has a seed-shell structure by forming a coating part including an organometal nanostructure with a seed particle of activated carbon as a center.

The selective control of the size of the composite has been difficult because of the preparation process of the conventional composite, but in the present invention, if the size of the seed particles could be controlled, the size of the composite may be selectively controlled according to the product to apply. Since the organometal nanostructure is formed only on the surface of the seed particle, the amount used of the organometal nanostructure could be reduced, and effects of reinforcing manufacturing competitiveness may be achieved.

The type of the seed particles of step (S1) is not specifically limited but may be one or more selected from the group consisting of carbon nanotube, graphene, graphite, amorphous carbon, carbon black, activated carbon, a metal material and an organometal nanostructure. In addition, considering that the organometal nanostructure has inferior ability to adsorb toluene among volatile organic compounds (VOC), the seed particle may be activated carbon that has excellent ability to adsorb toluene. In addition, the seed particles of step (S1) may be a state of flow by the air flow in a fluid bed coating machine.

In step (S2), a slurry including an organometal nanostructure and a binder is sprayed on the surface of the seed particles that are in a state of flow in the fluid bed coating machine, to prepare a composite in which a coating part including an organometal nanostructure and a binder is formed on the surface of the seed particles.

The spraying in step (S2) may be a Wurster spray method by which the spraying is conducted upwards from a bottom of the fluid bed coating machine or a Tangential spray method by which the spraying is conducted from a middle of the fluid bed coating machine to a tangential direction. By the upward spray method through spray nozzles at the bottom of the fluid bed coating machine or the tangential direction spray method through spray nozzles at the middle, the agglomeration of the seed particles coated may be controlled, and effects of uniformly forming the coating part including the organometal nanostructure and the binder on the surface of the seed particle may be achieved.

The slurry may include the binder in 1 to 40 parts by weight, 1 to 20 parts by weight, or 2 to 15 parts by weight based on 100parts by weight of the organometal nanostructure. If the above-described range is satisfied, the ratio of the organometal nanostructure coated on the surface of the seed particles may increase, while minimizing the loss of the organometal nanostructure, thereby achieving improving effects of ability to adsorb volatile organic compounds.

In addition, the binder included in the slurry may have a weight average molecular weight of 100,000 g/mol to 250,000 g/mol, 150,000 g/mol to 250,000 g/mol, or 160,000 g/mol to 210,000 g/mol. If the above-described range is satisfied, the adhesion of the organometal nanostructure may be maintained, and effects of increasing the ratio of the organometal nanostructure coated on the surface of the seed particles may be achieved.

Hereinafter, the present invention will be explained in particular through particular embodiments. However, the embodiments below are only for illustrating the present invention, and the scope of the present invention is not limited thereby.

### Examples

### Example 1

74.16 g of a MIL-125(Ti) powder was prepared. Then, the MIL-125(Ti) powder and 59.33 g of polyvinyl alcohol (a solution in which 7.5 wt% of polyvinyl alcohol is dispersed in water) were mixed to prepare a slurry.

To a fluid bed coating machine, 600 g of activated carbon was injected, and the activated carbon was made flow. Then, the slurry prepared was injected into the fluid bed coating machine, and the slurry was sprayed upwards through spray nozzles at the bottom of the fluid bed coating machine. The slurry was sprayed for 2 hours, and a sample of flowing activated carbon coated with the slurry at the surface thereof was obtained. The coated sample was fluidization dried at 80°C for 1 hour to manufacture a composite specimen.

### Example 2

105.88 g of a MIL-125(Ti) powder was prepared. Then, the MIL-125(Ti) powder and 84.67 g of polyvinyl alcohol (a solution in which 7.5 wt% of polyvinyl alcohol is dispersed in water) were mixed to prepare a slurry.

To a fluid bed coating machine, 600 g of activated carbon was injected, and the activated carbon was made flow. Then, the slurry prepared was injected into the fluid bed coating machine, and the slurry was sprayed upwards through spray nozzles at the bottom of the fluid bed coating machine. The slurry was sprayed for 2 hours, and a sample of flowing activated carbon coated with the slurry at the surface thereof was obtained. The coated sample was fluidization dried at 80°C for 1 hour to manufacture a composite specimen.

### Example 3

300 g of a MIL-125(Ti) powder was prepared. Then, the MIL-125(Ti) powder and 240 g of polyvinyl alcohol (a solution in which 7.5 wt% of polyvinyl alcohol is dispersed in water) were mixed to prepare a slurry.

To a fluid bed coating machine, 300 g of activated carbon was injected, and the activated carbon was made flow. Then, the slurry prepared was injected into the fluid bed coating machine, and the slurry was sprayed upwards through spray nozzles at the bottom of the fluid bed coating machine. The slurry was sprayed for 2 hours, and a sample of flowing activated carbon coated with the slurry at the surface thereof was obtained. The coated sample was fluidization dried at 80°C for 1 hour to manufacture a composite specimen.

### Example 4

600 g of a MIL-125(Ti) powder was prepared. Then, the MIL-125(Ti) powder and 480 g of polyvinyl alcohol (a solution in which 7.5 wt% of polyvinyl alcohol is dispersed in water) were mixed to prepare a slurry.

To a fluid bed coating machine, 150 g of activated carbon was injected, and the activated carbon was made flow. Then, the slurry prepared was injected into the fluid bed coating machine, and the slurry was sprayed upwards through spray nozzles at the bottom of the fluid bed coating machine. The slurry was sprayed for 4 hours, and a sample of flowing activated carbon coated with the slurry at the surface thereof was obtained. The coated sample was fluidization dried at 80°C for 1 hour to manufacture a composite specimen.

### Example 5

300 g of a MIL-125(Ti) powder was prepared. Then, the MIL-125(Ti) powder and 240 g of polyvinyl alcohol (a solution in which 7.5 wt% of polyvinyl alcohol is dispersed in water) were mixed to prepare a slurry.

To a fluid bed coating machine, 300 g of activated carbon was injected, and the activated carbon was made flow. Then, the slurry prepared was injected into the fluid bed coating machine, and the slurry was sprayed in a tangential direction through spray nozzles at the middle of the fluid bed coating machine. The slurry was sprayed for 2 hours, and a sample of flowing activated carbon coated with the slurry at the surface thereof was obtained. The coated sample was fluidization dried at 80°C for 1 hour to manufacture a composite specimen.

### Example 6

600 g of a MIL-125(Ti) powder was prepared. Then, the MIL-125(Ti) powder and 480 g of polyvinyl alcohol (a solution in which 7.5 wt% of polyvinyl alcohol is dispersed in water) were mixed to prepare a slurry.

To a fluid bed coating machine, 150 g of activated carbon was injected, and the activated carbon was made flow. Then, the slurry prepared was injected into the fluid bed coating machine, and the slurry was sprayed in a tangential direction through spray nozzles at the middle of the fluid bed coating machine. The slurry was sprayed for 2 hours, and a sample of flowing activated carbon coated with the slurry at the surface thereof was obtained. The coated sample was fluidization dried at 80°C for4 hour to manufacture a composite specimen.

### Comparative Example 1

100 g of a MIL-125(Ti) powder was injected into a high shear granulating (HSG) machine. Then, a mixture solution of 50 g of water and 80 g of polyvinyl alcohol (a solution in which 7.5 wt% of polyvinyl alcohol is dispersed in water) was injected into the high shear granulation machine to mix with the MIL-125(Ti) powder. Then, a granulation process was performed for 10 minutes under the conditions of a blade of 800 rpm and a chopper of 2,500 rpm. Then, drying was performed at 90°C for 24 hours to manufacture a powder specimen.

### Comparative Example 2

100 g of a MIL-125(Ti) powder and 59.33 g of polyvinyl alcohol (a solution in which 6.0 wt% of polyvinyl alcohol is dispersed in water) were mixed to prepare a slurry. Then, the slurry prepared was injected into a syringe, melted at 220°Cand mixed to manufacture a specimen having a pellet shape with a size of 3 mm.

### Comparative Example 3

The activated carbon in Example 1 was used as a specimen.

### Experimental Examples

### Example 1

With respect to the specimens of the Examples and Comparative Examples, particle size distribution, a coating ratio and a BET surface area were measured, and the measurement results are shown in Table 1 below.
1) Measurement of particle size distribution: By using a standard sieve of an ASTM standard, the particles prepared in Example 1 were classified. More particularly, after stacking standard sieves having a mesh size of 850 µm, 600 µm, 300 µm, and 150 pmone by one, all the particles prepared in Example 1 was put on the uppermost, and the resultant was set on a sieve shaker. Classification was performed for 10 minutes with an amplitude of 20, each of particles remaining between the standard sieves were taken out and weighed, percentage was calculated, and the particle size distribution of the particles was computed. In addition, by the same method, the particle size distribution of the particles prepared in Examples 2 to 6 and Comparative Examples 1 to 4 was computed.
2) Measurement of coating ratio: The coating ratio was calculated through the equation of "{(mass of coated composite)/(mass of seed particles before coating) + (mass of organometal nanostructure before coating)} X 100 (%)".
3) Measurement of BET surface area: Computation was performed from a nitrogen gas adsorption amount under a liquid nitrogen temperature (77K) using BELSORP-mino II of BEL Japan Inc.

**[Table 1]**

| | Coating ratio (%) | Particle size distribution (wt%) | | | | BET surfac earea (m²/g) |
|---|---|---|---|---|---|---|
| | | < 150 µm | 150-600 µm | < 600-850 µm | > 850 µm | |
| Example 1 | 11 | 0 | 100 | 0 | 0 | 920 |
| Example 2 | 15 | 0 | 100 | 0 | 0 | 970 |
| Example 3 | 45 | 0 | 100 | 0 | 0 | 1, 017 |
| Example 4 | 74 | 0 | 100 | 0 | 0 | 1,076 |
| Example 5 | 47 | 0 | 95.30 | 4.10 | 0.60 | 1, 102 |
| Example 6 | 76 | 0 | 95.10 | 4.35 | 0.55 | 1,150 |
| Comparative Example 1 | 0 | 2.17 | 67.48 | 20.05 | 10.30 | 800 |
| Comparative Example 2 | 0 | 0 | 0 | 0 | 100 | 750 |
| Comparative Example 3 | 0 | 0 | 100 | 0 | 0 | 800 |

### Experimental Example 2

With respect to the specimens of the Examples and Comparative Examples, adsorption amounts of formaldehyde that is a volatile organic compound and abrasion degrees were measured by the methods below. Measurement results are shown in Table 2.
1) Measurement of adsorption amount of volatile organic compound: A filter including each specimen of the Examples and Comparative Examples was put in a gas bag, and 15 ppm of formaldehyde was injected thereto, followed by sealing up and standing at room temperature for 2 hours. By using a gas detector tube method (FTM-5-2: 2004), the amount of formaldehyde remaining after 2 hours in the gas bag was measured. The adsorption amount of formaldehyde was calculated by subtracting the amount of formaldehyde remaining after 2 hours in the gas bag from initial 15 ppm of formaldehyde.
2) Measurement of abrasion degree:Each specimen of the Examples and Comparative Examples was injected into a beads machine including two types of zirconia (Zr) balls having average particle diameters of 5 mm and 10 mm. Then, the beads machine was shaken for 10 minutes, particles passing through a standard sieve with 150 µm were taken out, a weight was measured, and a percentage was calculated.

**[Table 2]**

| | Formaldehyde adsorption amount (ppm) | Abrasion degree (wt%) |
|---|---|---|
| Example 1 | 10.2 | 7.8 |
| Example 2 | 10.1 | 7.7 |
| Example 3 | 10.3 | 7.4 |
| Example 4 | 12.1 | 7.0 |
| Example 5 | 10.1 | 6.0 |
| Example 6 | 12.2 | 5.8 |
| Comparative Example 1 | 10.2 | 7.5 |
| Comparative Example 2 | 7.5 | 9.2 |
| Comparative Example 3 | 6.5 | 14.5 |

### Experimental Example 3

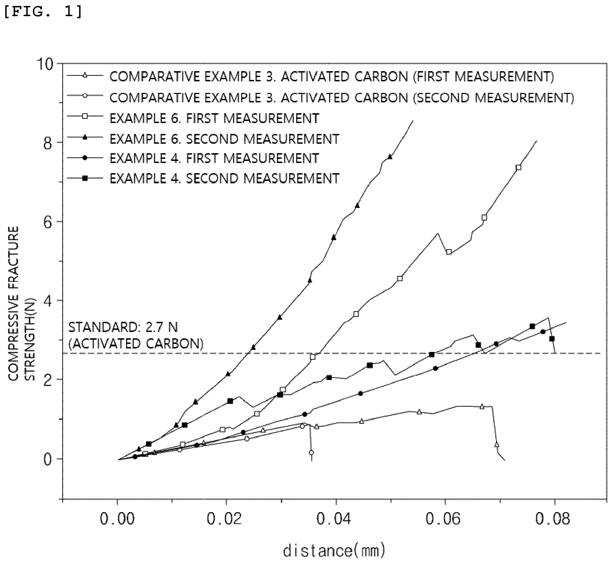

With respect to each specimen of Examples 4 and 6 and Comparative Example 3, a jig for compression was installed, the specimen was inserted between the jigs, a compressive force was applied in a speed of 1 mm/min to 10 mm/min from above, a load value transferred and applied by the force from above to the specimen was measured, a compressive fracture strength was measured based on the depth of moment when a pressure was 0.2 N. The compressive fracture strength was measured once more by the same method, and measurement results are shown in FIG. 1.

Referring to Table 1 and Table 2, it could be confirmed that in the cases of Examples 1 to 6, in which composites were prepared by injecting seed particles into a fluid bed coating machine and making the seed particles flow, and by spraying a slurry including an organometal nanostructure and a binder on the seed particles in flow, in the process for preparing a composite according to the present invention, particles with an average particle diameter of 150 pmto 600 µmcould be obtained in a high yield without increasing anabrasion degree and degrading the adsorption amount of volatile organic compounds when compared to Comparative Examples 1 to 3.

Particularly, it could be confirmed that the composites prepared from Examples 1 to 6 showed markedly high ratio of obtaining particles with an average particle diameter of 150 µm to 600 µm without increasing an abrasion degree and degrading the adsorption amount of volatile organic compounds when compared to the composite of Comparative Example 1 prepared by a high shear granulation (HSG) method, and showed a lower abrasion degree and increased adsorption amount of volatile organic compounds when compared to the composite of Comparative Example 2 manufactured into a pellet shape.

In addition, it could be confirmed that the composites prepared from Examples 1 to 6 showed similar particle size distribution as the activated carbon of Comparative Example 3, but the composites prepared from Examples 1 to 6 showed lower abrasion degrees by the bonding force of a seed and a coating part in contrast to the activated carbon of Comparative Example 3. In addition, referring to FIG. 1, the composites prepared from Examples 4 and 6 showed unbreakable properties of the composites even with the increase of the pressure, but the activated carbon of Comparative Example 3 showed easily breaking phenomenon of the activated carbon according to the increase of the pressure. Accordingly, it could be confirmed that the composites prepared from Examples 4 and 6 showed excellent structural stability in contrast to the activated carbon of Comparative Example 3.

From the results, the results could be confirmed that the composite prepared according to the method for preparing a composite according to the present invention has excellent structural stability, and particles with an average particle diameter of 150 µm to 600 µm could be obtained in a high yield without increasing a abrasion degree and degrading the adsorption amount of volatile organic compounds.

## Claims

1. A composite comprising: a seed particle; and a coating part formed on the seed particle, wherein
the coating part comprises an organometal nanostructure and a binder,
an average particle diameter of the seed particles is 150 um to 3,350 µm, and
an average particle diameterof the composite is 110% to 700% with respect to the average particle diameter of the seed particles.

2. The compositeaccording to claim 1, wherein the seed particle comprises one or more selected from the group consisting of carbon nanotube, graphene, graphite, amorphous carbon, carbon black, activated carbon, a metal material and an organometal nanostructure.

3. The compositeaccording to claim 1, wherein theseed particle is spherical or pseudo-spherical.

4. The compositeaccording to claim 1, wherein the average particle diameter of the seed particles is 150 um to 300 µm.

5. The compositeaccording to claim 1, wherein thecomposite has particle size distribution such that particles having an average particle diameter of 150pm to 600pmare 80 wt% or more.

6. The compositeaccording to claim 1, wherein theaverage particle diameter of the composite is 150 um to 3,350 µm.

7. The compositeaccording to claim 1, wherein a specific surface area per weight of the seed particles is 10 m²/g or more.

8. The compositeaccording to claim 1, wherein the binder comprises one or more selected from the group consisting of polyvinyl butyral (PVB), polyvinyl alcohol (PVA), polyvinyl chloride (PVC), polycarbonate (PC), polyamide (PA), polyoxymethylene (POM), polystyrene (PS), polyvinyl pyrrolidone (PVP), hydroxypropyl methylcellulose (HPMC) and acetylcellulose.

9. The composite according to claim 1, wherein the coating part has a coating ratio calculated by the following Mathematical Formula 1 of 10% to 90%: Coating ratio = { (mass of coated composite)/(mass of seed particles before coating) + (mass of organometal nanostructurebefore coating)} X 100 (%)

10. A method for preparing a composite, the method comprising:
a step of injecting seed particles into a fluid bed coating machineand making the seed particles flow(S1); and
a step of spraying a slurry comprising an organometal nanostructure and a binder onto the seed particles in flowing (S2) .

11. Themethod for preparing a composite according to claim 10, wherein
the spraying of step (S2) is conducted by a Wurster spray method by which the spraying is conducted upwards from a bottom of the fluid bed coating machine or by a Tangential spray method by which the spraying is conducted from a middle of the fluid bed coating machine to a tangential direction.

12. The method for preparing a composite according to claim 10, wherein the slurry comprises the binder in 1 to 40 parts by weight based on 100 parts by weight of the organometal nanostructure.

13. The method for preparing a composite according to claim 10, wherein the binder has a weight average molecular weight of 100,000 g/mol to 250,000 g/mol.
